# EUROPEAN PATENT APPLICATION

(11) **EP 4 835 861 A1**
(43) Date of publication of application: **04.11.2026**
(21) Application number: 23963123.7
(22) Date of filing: 27.12.2023
(51) Int. Cl.: G08G 5/00

(54) **FLYING OBJECT MANAGEMENT SYSTEM AND FLYING OBJECT**

(71) Applicant: Kubota Corporation, Osaka-shi, Osaka 530-0011 (JP)
(72) Inventor: SAKAGUCHI Kazuo, Sakai-shi, Osaka 590-0908 (JP)
(74) Representative: Cabinet Beau de Loménie
(86) International application number: PCT/JP2023/046959
(87) International publication number: WO 2025/141774

(57) **Abstract**

An aerial vehicle management system for managing an aerial vehicle that performs work flight includes: a work area acquisition unit 31 configured to acquire a work target area; a work flight inhibition condition management unit 32 configured to manage a work flight inhibition condition for the work flight; and a work area setting unit 33 configured to set a non-work area in the work target area based on the work flight inhibition condition, and to set an area excluding the non-work area from the work target area as an actual work area.

## Description

### Technical Field

The present invention relates to an aerial vehicle that performs work flight, and an aerial vehicle management system that manages the work flight of the aerial vehicle.

### Background Art

An example of this aerial vehicle is an aircraft that produces lift by utilizing propellers, i.e., rotary wings, rotating about axes, and is capable of remote-controlled flight or autonomous flight. Such an aerial vehicle is also referred to as a "drone", a "multirotor", or a "multicopter", and is used for agricultural work such as chemical spraying (spraying of agricultural chemicals, fertilizers, or the like), seeding, transplanting, mowing, and harvesting, as well as for applications such as aerial photography, surveying, and article transportation.

When an unmanned aerial vehicle is used for the application of chemical spraying, it is necessary to appropriately spray agricultural chemicals onto a work target area (agricultural field) in an agricultural zone. Accordingly, Patent Document 1 discloses a technology for changing a flight path based on wind speed and wind direction measured during flight of an unmanned aerial vehicle.

### Prior Art Document

### Patent Document

Patent Document 1: JP 2021-75277A

### Summary of the Invention

### Problem to be Solved by the Invention

An aerial vehicle that performs ground work while flying over a work area defined by a boundary line has conditions for appropriately performing the work that are at least partially different from those of a traveling working machine that travels while performing work in the work area, even if the same work is performed. For example, in traveling work by a traveling working machine, a safety zone is set between the traveling working machine and a boundary line (a boundary object that creates the boundary line) to avoid interference (collision) with the boundary line. In contrast, an aerial vehicle flies above the boundary line, and thus interference with the boundary line does not substantially occur. Accordingly, a safety zone that is indispensable for the traveling working machine can be rendered unnecessary. However, if an obstacle is higher than a flight altitude, interference with the obstacle must be avoided. Further, in the case of an aerial vehicle that performs spraying of agricultural chemicals as disclosed in Patent Document 1, it is necessary to consider diffusion of the agricultural chemicals, which varies depending on wind speed, wind direction, and flight altitude. In practice, the aerial vehicle cannot freely fly around the work area, and if a main road, a residential house, or the like is located adjacent to the work area, it is necessary to set a safety zone therebetween.

In view of such circumstances, an object of the present invention is to provide an aerial vehicle management system that enables an aerial vehicle that performs work flight over a work area to perform appropriate ground work and appropriate flight therefor, and an aerial vehicle that uses the aerial vehicle management system.

### Means for Solving Problem

An aerial vehicle management system according to the present invention for managing an aerial vehicle that performs work flight includes: a work area acquisition unit configured to acquire a work target area; a work flight inhibition condition management unit configured to manage a work flight inhibition condition for the work flight; and a work area setting unit configured to set a non-work area in the work target area based on the work flight inhibition condition, and to set an area excluding the non-work area from the work target area as an actual work area.

With this configuration, a non-work area and an actual work area in the acquired work target area are set based on a work flight inhibition condition for the work flight. In this case, unlike conventional traveling working machines traveling on the ground, the actual work area is not set with a safety zone (substantial non-work area) interposed between a boundary line and the actual work area, but instead, the non-work area (or the actual work area) is set based on the work flight inhibition condition, which is a work restriction unique to aerial vehicles. For example, if the periphery of the work site is a free flight space, work flight across the boundary line can be performed, and therefore the actual work area, which is to be a substantial ground work area, is set in contact with the boundary line without a safety zone. Conversely, if private houses or main roads are present around the work target area, work flight is restricted based on provisions of aviation laws, and therefore the non-work area is set between the boundary line and the actual work area. Further, if work flight exerts some influence on the periphery of the work target area, the non-work area (or the actual work area) is set in consideration of this influence. In this way, since the work flight inhibition condition management unit that manages the work flight inhibition condition for work flight is provided, work flight suitable for the work target area can be performed.

When a work flight inhibition condition to be applied to the work target area is determined, work flight behavior for the actual work area set based on the work flight inhibition condition can also be determined. For example, when private houses are present around a boundary line of the work target area, work flight is performed with priority given to compliance with provisions of aviation laws. Conversely, when a safety zone does not need to be set along the boundary line of the work target area, aerial vehicles perform efficient work flight without waste based on flight performance. Information that enables such efficient work flight is important for work flight. Therefore, according to the present invention, the aerial vehicle management system includes a work flight regulation information generation unit that generates work flight regulation information for regulating the work flight for the actual work area based on the work flight inhibition condition.

A first restriction included in the information for regulating work flight is an area where the aerial vehicle is permitted to fly (or a flight prohibited area). Accordingly, in the present invention, the work flight regulation information includes information regarding a flight area of the aerial vehicle during the work flight. An area in which the aerial vehicle can move is a three-dimensional space, and through appropriate flight in the space, efficient ground work is performed with respect to a limited ground area (substantially a two-dimensional plane). At this time, a work flight altitude of the aerial vehicle is important. Accordingly, in the present invention, the flight area is a three-dimensional space for which at least one of a minimum above-ground height and a maximum above-ground height is prescribed.

If the work target area is an agricultural field or the like, ridges forming boundary lines of the agricultural field are located higher than the surface of the agricultural field. In addition, obstacles such as steel towers or sheds existing inside or around the agricultural field are also located higher than the surface of the agricultural field. Accordingly, in the present invention, the minimum above-ground height of the flight area is locally different.

To reliably regulate the work flight of the aerial vehicle, it is effective to prescribe a flight route thereof before the work flight. Accordingly, in the present invention, the work flight regulation information includes a flight route in the flight area.

The aerial vehicle flies above the work target area while performing ground work (actual work flight), or the aerial vehicle flies without performing the ground work (non-work flight). In the case of non-work flight, since no impact on the surroundings results from the ground work, flight restrictions are more limited compared to actual work flight. Therefore, when the flight route is to be set, it is preferable to clearly identify whether the flight is actual work flight or non-work flight. Accordingly, in the present invention, the flight route includes an actual work flight route along which flight is performed while work is actually performed and a non-work flight route along which flight is performed while work is temporarily stopped.

In the ground work performed by the aerial vehicle, an effect of the ground work (which is an effect of the ground work on the work target area and is referred to as a "degree of work" herein) varies depending on flight behaviors such as a flight speed and a flight altitude. For example, in a case where the ground work is chemical spraying, it is expected that the lower the flight speed and the lower the flight altitude, the higher the spray density is, and the higher the degree of work is. Accordingly, in the present invention, a degree of work by the aerial vehicle on the actual work area is variable, and the actual work flight route includes the degree of work of the aerial vehicle. In one specific embodiment, the degree of work is a spray amount per unit area (of the ground surface) in chemical spraying.

In one preferred embodiment of the present invention, a flight speed and a flight height are assigned to each flight position in the flight route. This configuration is effective in a case where the ground work is desired to be performed only in a specific section of the work target area at a degree of work different from that of other sections.

The work flight for performing desired ground work on the work target area divided into the actual work area and the non-work area is regulated by the work flight regulation information generated based on the work flight inhibition condition. It is desirable that such work flight regulation information is modifiable based on the experience and knowledge of an administrator in view of various changes in situations at a work site. Accordingly, in the present invention, the work flight regulation information is manually modifiable.

Not only the aerial vehicle management system as described above, but also an aerial vehicle that utilizes the above-described aerial vehicle management system is a subject of the present invention. Such an aerial vehicle includes: an information acquisition unit configured to download the work flight regulation information from the aerial vehicle management system; and a flight control unit configured to perform flight based on the work flight regulation information. Furthermore, the aerial vehicle which is the subject of the present invention may include the above-described aerial vehicle management system.

### Brief Description of the Drawings

FIG. 1 is a schematic view showing an agricultural field where ground work is performed by an aerial vehicle managed by an aerial vehicle management system.
FIG. 2 is a flowchart showing a basic flow of aerial vehicle management.
FIG. 3 is a schematic view showing a setting of an actual work area and a non-work area in a work target area.
FIG. 4 is a functional block diagram showing functional units in the aerial vehicle management system and the aerial vehicle.
FIG. 5 is an information flow diagram showing a flow of information in the aerial vehicle management system.

### Best Mode for Carrying out the Invention

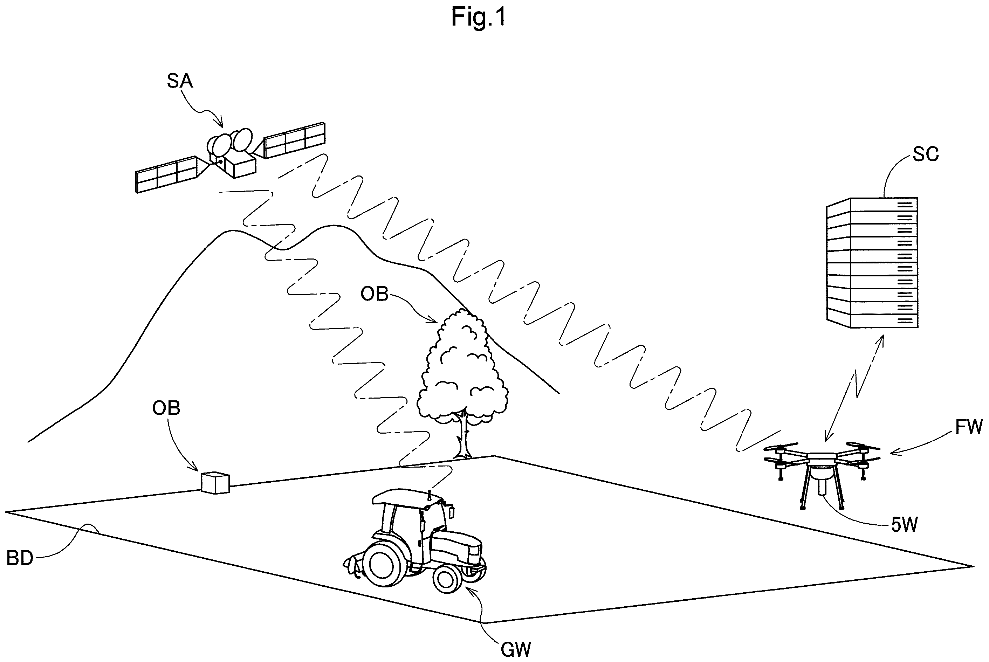

FIG. 1 shows an aerial vehicle FW that performs work flight over an agricultural field as a work target area. Here, the aerial vehicle FW is a chemical sprayer having a chemical spraying device as a working device 5W mounted on the body thereof. The aerial vehicle FW can perform various types of work flight with the use of various working devices 5W mounted on the body thereof. For example, if the aerial vehicle FW is equipped with a mowing device (weeding device), the aerial vehicle FW functions as a flying mower. Of course, a dedicated aerial vehicle FW for aerial work may be used. Further, the body of the aerial vehicle FW and the working device 5W do not have to be rigidly connected to each other, and may be connected by a rope, a chain, or a link. In this case, the working device 5W can travel by itself, and if necessary, the aerial vehicle FW lifts up the working device 5W, thereby making it possible to change direction or avoid an obstacle. The ground work performed by the aerial vehicle FW that performs work flight over the agricultural field includes spraying of chemicals (including fertilizers), seedling transplanting, seeding, weeding (including mowing), harvesting, and the like. Further, ground work is also performed on the agricultural field by a ground working machine GW that travels on the ground.

As shown in FIG. 1, an agricultural field as a work target area is bounded by boundary lines BD such as ridges, and obstacles OB are present in or around the agricultural field. For agricultural field work, various types of ground working machines GW, such as a tractor, a transplanter, a seeder, and a harvester, are also used. The aerial vehicle FW and the ground working machine GW each can perform automatic flight (automatic travel) along a target route (target path) by calculating its own position based on a signal from a positioning satellite SA. In this embodiment, an aerial vehicle management system is constructed in a service computer SC at a remote location, but may be constructed in a computer owned by an agricultural field administrator. In the service computer SC, a ground working machine management system that manages work travel of the ground working machine GW can also be constructed.

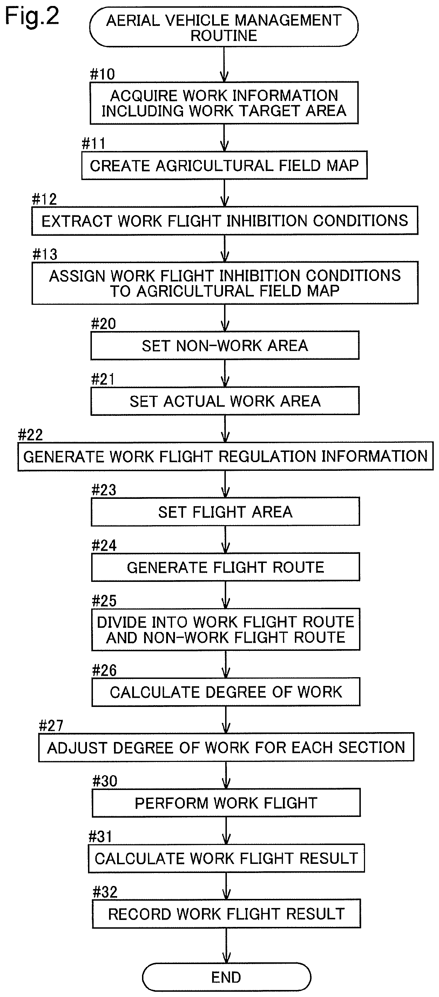

Next, with reference to FIG. 2, one type of schematic management processing for the aerial vehicle FW in the aerial vehicle management system will be described. First, work information including information regarding a work target area (agricultural field) is acquired (#10). An agricultural field map that includes a periphery of the work target area is created from information regarding the work target area (#11). In ground work for this agricultural field, factors that inhibit work flight of the aerial vehicle FW, that is, work flight inhibition conditions, are extracted from a database of the aerial vehicle management system (#12). Since the work flight inhibition conditions are associated with specific areas in each agricultural field, the extracted work flight inhibition conditions are assigned to corresponding areas in the agricultural field map (#13).

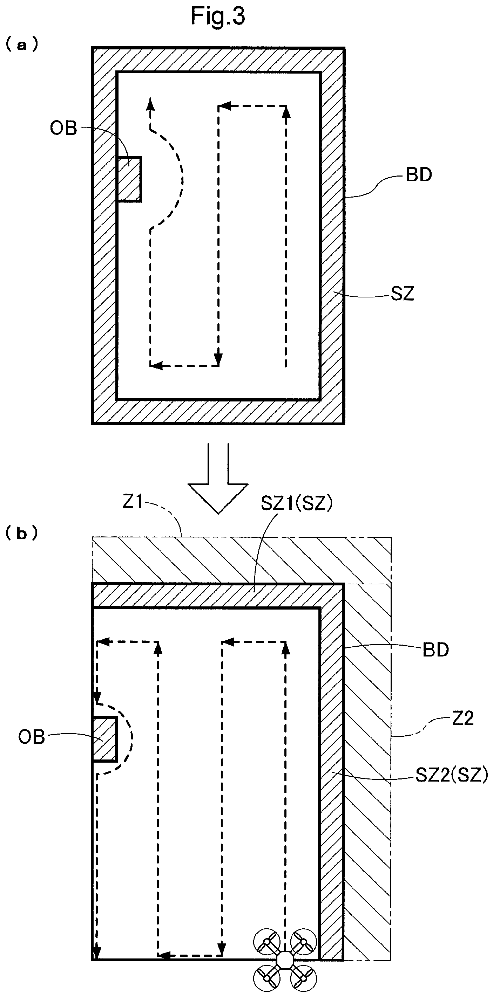

Based on the work flight inhibition conditions assigned to the agricultural field, a non-work area SZ (see FIG. 3) in which work is not performed is set in the agricultural field (#20), and further, an area of the agricultural field excluding the non-work area SZ is set as an actual work area (#21). Here, the non-work area SZ is an area in which a problem (such as contact with the obstacles OB or an adverse effect of the work on the environment) occurs if work is performed in the non-work area SZ.

Next, based on the work flight inhibition conditions, work flight regulation information that prescribes work flight for ground work on the actual work area is generated (#22). The work flight regulation information includes information regarding a flight area, and the flight area is set based on this information (#23). When the flight area is set, a flight route for performing ground work on the actual work area is set within the flight area (#24).

With reference to FIG. 3, an example of the processing from #13 to #24 described above will be schematically described. (a) of FIG. 3 shows an example of setting the non-work area SZ for traveling work in the agricultural field by a conventional ground working machine GW. The non-work area SZ is called a safety zone, and is set as a band area having a predetermined width inside the boundary lines BD of the agricultural field. This is set to avoid inadvertent contact between the ground working machine GW and ridges or the like that form the boundary lines BD. Also, for the obstacles OB protruding into the agricultural field, a detour route considering the safety zone is set.

(b) of FIG. 3 shows an example in which two work flight inhibition conditions are assigned to the agricultural field. The work flight inhibition condition assigned to the upper boundary line BD is a first work flight inhibition condition, and is shown as a first work flight inhibition condition area Z1 in the figure. The work flight inhibition condition assigned to the right boundary line BD is a second work flight inhibition condition, and is shown as a second work flight inhibition condition area Z2 in the figure. For example, the first work flight inhibition condition is a proximity prohibition of the aerial vehicle FW due to the presence of a private house near the upper boundary line BD, and the second work flight inhibition condition is a chemical spraying prohibition due to the presence of a pesticide-free cultivation agricultural field adjacent to the right boundary line BD. On the other hand, since no work flight inhibition condition is assigned to the right and lower boundary lines BD, work flight beyond the boundary lines BD is possible, and ground work to the limits of the boundary lines BD, that is, work flight without considering a safety zone, is possible. In (b) of FIG. 3, a work flight route is created considering a safety zone set inside the first work flight inhibition condition area Z1 and the second work flight inhibition condition area Z2, and avoidance of collision with the obstacles OB.

The flight route generated in #24 is divided into an actual work flight route along which the aerial vehicle FW actually performs ground work on the actual work area and a non-work flight route along which the aerial vehicle FW performs obstacle avoidance, direction change, or the like without performing ground work (#25). Since this division is defined by spatial position coordinates, the aerial vehicle FW can identify the actual work flight route and the non-work flight route by referring to its own position calculated using satellite positioning or inertial positioning and the defined spatial position coordinates. Furthermore, for the flight route, a flight speed and a flight height are assigned to each flight position (own position).

Next, a work amount in the actual work area is calculated and assigned to the actual work flight route (#26). This work amount is, for example, a spraying amount per unit area in chemical spraying, a number of seedlings at planting points in a row in seedling transplanting, or a seeding amount at seeding points in a row in seeding, and the amount is adjustable depending on the position in the actual work area. Further, the spraying amount or the like is adjustable as appropriate depending on wind speed and wind direction during work. In such a case, the work amount is adjusted for each section unit of the actual work area (#27). The adjusted work amounts are assigned to the respective flight positions of the corresponding actual work flight route. Note that if the work amount is predetermined, the processing in #26 and #27 may be omitted.

When the preprocessing from #10 to #27 is completed, an actual work flight is performed (#30). Furthermore, during the work flight or after the end of the work flight, work flight results are calculated (#31). The work flight results can be calculated from flight positions and operation contents of the working device 5W mounted on the aerial vehicle FW. In a case where the aerial vehicle FW is equipped with a monitoring camera, it is also possible to calculate the work flight results from images captured by the monitoring camera. The calculated work flight results are recorded and stored in a database of the aerial vehicle management system (#32).

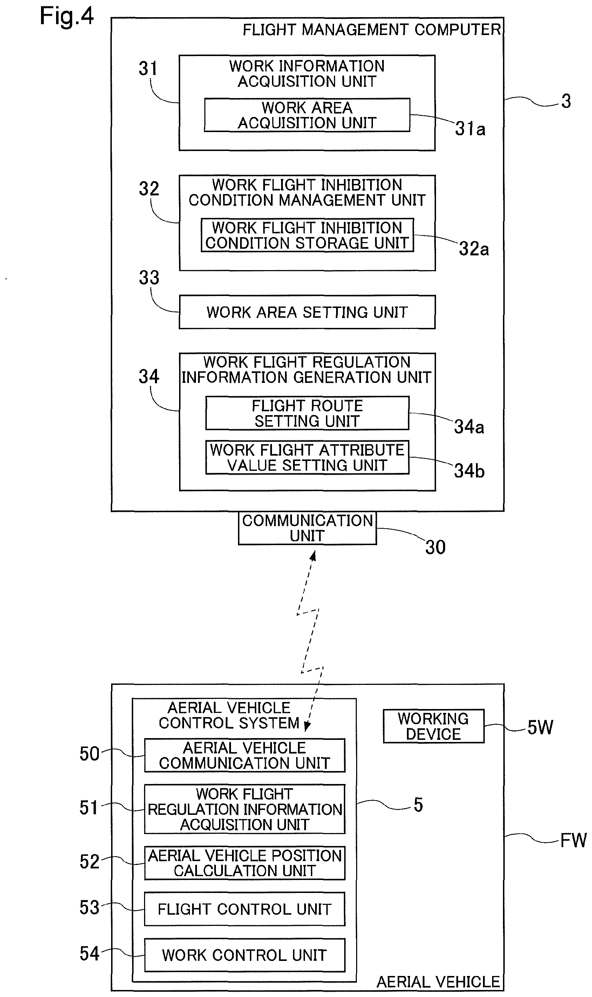

FIG. 4 is a functional block diagram showing functional units of a flight management computer 3 (an example of the service computer SC) in which an aerial vehicle management system is constructed, and functional units of the aerial vehicle FW.

The flight management computer 3 includes, as functional units, a work information acquisition unit 31, a work flight inhibition condition management unit 32, a work area setting unit 33, and a work flight regulation information generation unit 34. These functional units can be realized by cooperation between hardware associated with the flight management computer 3 and a program installed in the flight management computer 3. Of course, in a specific functional unit, the function thereof may be realized by only hardware or only a program, or may be realized by coordination with an external application server.

The work information acquisition unit 31 acquires work information via communication or a portable memory. The work information is generated, for example, in a server computer capable of exchanging data with the flight management computer 3 or a personal computer of a farmer, and is transferred to the flight management computer 3. Of course, the work information may be created in the flight management computer 3. The work information includes information regarding work content and a work target area. A work area acquisition unit 31a extracts the work target area from the work information and, if necessary, records the work target area in a memory in combination with map information.

The work flight inhibition condition management unit 32 manages work flight inhibition conditions in work flight. Specifically, based on legal restrictions such as laws including aviation laws and agricultural chemical control laws, municipal regulations, and voluntary regulations, and agricultural field work restrictions such as those arising from a work target area, work content, and environmental data, the work flight inhibition condition management unit 32 extracts the work flight inhibition conditions from a work flight inhibition condition storage unit 32a, which is a database that stores various work flight inhibition conditions for work flight on a target work site (agricultural field).

The work area setting unit 33 sets the non-work area SZ in the work target area based on the extracted work flight inhibition conditions, and sets an area excluding the non-work area SZ from the work target area as an actual work area.

The work flight regulation information generation unit 34 generates work flight regulation information that prescribes work flight for the actual work area based on the work flight inhibition conditions. The work flight regulation information includes information regarding a flight area permitted during work flight of the aerial vehicle FW. The flight area is a three-dimensional space for which at least one of a minimum above-ground height and a maximum above-ground height is prescribed. Since the minimum above-ground height is set to exceed the height of a crop grown in the agricultural field and exceed the height of boundary objects such as ridges forming the boundary lines BD of the agricultural field, the minimum above-ground height of the flight area is locally different.

The work flight regulation information generation unit 34 includes a flight route setting unit 34a and a work flight attribute value setting unit 34b. The flight route setting unit 34a sets a flight route in the flight area. The flight route is divided into an actual work flight route along which flight is performed while work is actually performed and a non-work flight route along which flight is performed while work is temporarily stopped. Here, the form of non-work flight includes a form of flying while stopping the operation of the working device 5W mounted on the aerial vehicle FW and a form of flying while lifting the working device 5W from the agricultural field to disable work on the ground, with the working device 5W operating. Furthermore, for the flight route, a flight speed and a flight height are assigned to each flight position.

The work flight attribute value setting unit 34b sets various parameters and default values for work flight as work flight attribute values. The work flight attribute values include a degree of work for the actual work area, such as a seeding amount per unit area (or per unit distance of a row) in seeding work, a fertilizer amount per unit area (or per unit distance of a row) in fertilization work, and a spraying amount per unit area in chemical spraying. When the work amount is variable, the work amount is set for each flight position.

Since the work flight regulation information needs to be changed depending on the environmental state of the agricultural field, the state of crops grown in the agricultural field, and the like, the work flight regulation information can be manually modified on-site or based on a request from the site.

As shown in FIG. 4, an aerial vehicle control system 5 of the aerial vehicle FW includes, as functional units, an aerial vehicle communication unit 50, a work flight regulation information acquisition unit 51, an aerial vehicle position calculation unit 52, a flight control unit 53, and a work control unit 54. These functional units can also be realized by cooperation between hardware associated with the flight management computer 3 and a program installed in the flight management computer 3. Of course, in a specific functional unit, the function thereof may be realized by only hardware or only a program, or may be realized by coordination with an external application server.

The aerial vehicle communication unit 50 can communicate with the communication unit 30 of the flight management computer 3. The aerial vehicle communication unit 50 can also communicate with a remote controller (not shown). Furthermore, the aerial vehicle communication unit 50 can communicate with other aerial vehicles FW.

The work flight regulation information acquisition unit 51 is an information acquisition unit that downloads the work flight regulation information from the flight management computer 3. From the acquired work flight regulation information, the work flight regulation information acquisition unit 51 provides flight control information regarding flight control such as the flight area and the flight route to the flight control unit 53, and provides work control information regarding work control for the working device 5W mounted on the aerial vehicle FW to the work control unit 54.

The aerial vehicle position calculation unit 52 calculates its own position based on satellite navigation and inertial navigation, and provides the position to the flight control unit 53 and the work control unit 54. The flight control unit 53 performs flight control based on the calculated own position, the provided flight route, and the work flight attribute values. The work control unit 54 provides a work control signal to the working device 5W (here, a chemical spraying device) based on the calculated own position and the work flight attribute values assigned to the flight position.

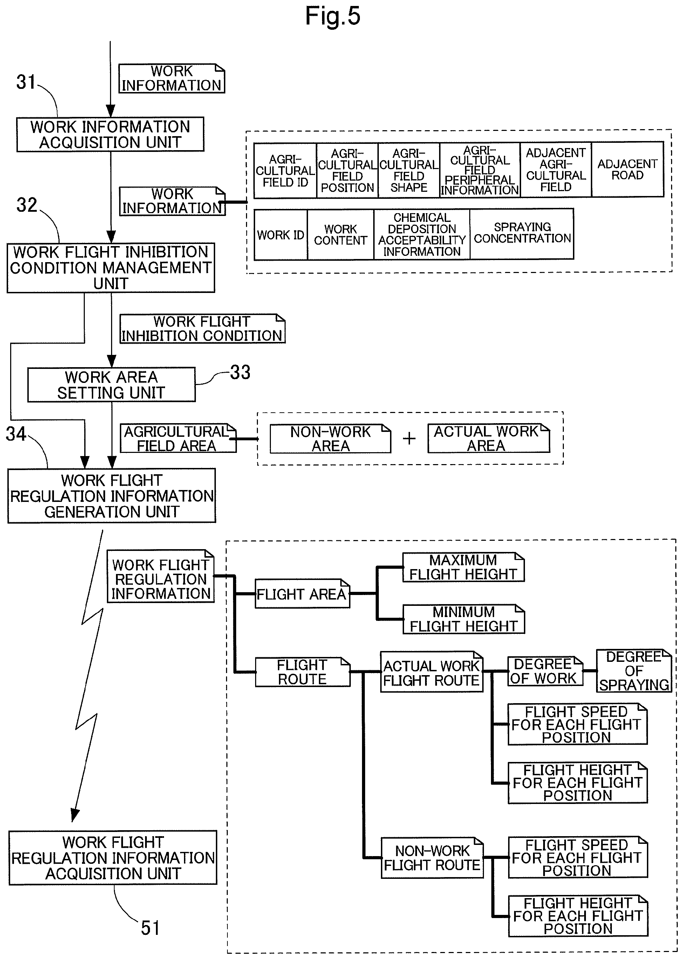

Next, an example of a flow of information between the functional units included in the aerial vehicle management system will be described with reference to FIG. 5. The work information received by the work information acquisition unit 31 includes information regarding the agricultural field and information regarding the work. The work information acquisition unit 31 extracts, from the received work information, agricultural field information regarding the agricultural field, which is a work target area for which work is scheduled, and work information regarding the work content. For example, the agricultural field information includes an agricultural field ID, a position of the agricultural field on a map, an agricultural field shape, information regarding ridges, entrances and exits, and obstacles OB around the agricultural field (agricultural field peripheral information), crop information of an adjacent agricultural field, information regarding a road or a private house existing around the agricultural field, and the like. The work information for chemical spraying work here includes a work ID, work content, chemical deposition acceptability information, a spraying concentration for the agricultural field, and the like. The chemical deposition acceptability information includes a spraying concentration that adversely affects crops in an adjacent agricultural field, a spraying concentration that adversely affects an adjacent road or private house, and the like.

The work information acquisition unit 31 extracts information regarding creation of work flight inhibition conditions from the work information and provides the information to the work flight inhibition condition management unit 32. The work flight inhibition condition management unit 32 generates the work flight inhibition conditions based on the information provided from the work information acquisition unit 31 and provides the conditions to the work area setting unit 33 and the work flight regulation information generation unit 34. The work flight inhibition conditions provided to the work area setting unit 33 are conditions necessary for setting the work area, and the work flight inhibition conditions provided to the work flight regulation information generation unit 34 are conditions necessary for generating the work flight regulation information, and these conditions are not necessarily identical.

The work area setting unit 33 sets an agricultural field area divided into the non-work area SZ and the actual work area based on the work flight inhibition conditions. This agricultural field area is the area to be covered by the work flight.

The work flight regulation information generation unit 34 generates the work flight regulation information from the work flight inhibition conditions provided from the work flight inhibition condition management unit 32 and the agricultural field area set by the work area setting unit 33. In this embodiment, the work flight regulation information includes information regarding a flight area and flight routes, and the flight routes include an actual work flight route and a non-work flight route. To the actual work flight route, a degree of spraying (such as a liquid concentration and a spraying amount per unit area) as a degree of work, flight speeds at respective flight positions, and flight heights at respective flight positions are assigned. The degree of spraying may also be variable at respective flight positions. To the non-work flight route, flight speeds at respective flight positions and flight heights at respective flight positions are assigned.

The work flight regulation information generated by the work flight regulation information generation unit 34 is sent to the work flight regulation information acquisition unit 51 included in the aerial vehicle FW. The aerial vehicle FW performs the work flight based on the received work flight regulation information.

Note that in the above description, the non-work area SZ in the work target area is an area where ground work is not performed, and is not an area above which the aerial vehicle FW is prohibited from flying. The aerial vehicle FW can fly above the non-work area SZ and perform ground work on the actual work area in the work target area.

### Alternative Embodiments

(1) Although the above embodiment describes a mode in which a single aerial vehicle FW performs work flight for a single agricultural field (work site), the aerial vehicle management system according to the present invention is also capable of managing a plurality of aerial vehicles FW that each perform work flight for the same single agricultural field (work site). In this case, each aerial vehicle FW may perform the same work, but may also perform different work (such as seeding and fertilization).
(2) In the above-described embodiment, the aerial vehicle FW performs work flight based on the work flight regulation information sent from the flight management computer 3, which is a core element of the aerial vehicle management system. Alternatively, the aerial vehicle FW may include the flight management computer 3. Further, the aerial vehicle FW may include at least one functional unit of the flight management computer 3.
(3) In the above-described embodiment, the aerial vehicle FW is an unmanned aerial vehicle, but may be a remote-controlled aerial vehicle. In that case, a remote control operator operates the aerial vehicle FW based on the work flight regulation information received from the flight management computer 3. Alternatively, only some of the behaviors of the aerial vehicle FW may be performed by remote control. For example, flight along the flight route may be performed by autopilot of the aerial vehicle FW, and only control of the working device 5W for ground work during flight may be performed via remote control. Further, emergency flight such as obstacle avoidance flight can be performed via remote control.

Note that the configurations disclosed in the above-described embodiments (including alternative embodiments, the same applies hereinafter) can be applied in combination with configurations disclosed in other embodiments as long as no contradiction arises. Further, the embodiments disclosed in the present specification are illustrative, and the embodiments of the present invention are not limited thereto, and can be modified as appropriate without departing from the object of the present invention.

### Industrial Applicability

The present invention can be applied to a system for managing an aerial vehicle that performs work flight in a work site such as an agricultural field.

### Description of Reference Signs

- 3: Flight Management Computer
- 31: Work Information Acquisition Unit
- 31a: Work Area Acquisition Unit
- 32: Work Flight Inhibition Condition Management Unit
- 32a: Work Flight Inhibition Condition Storage Unit
- 33: Work Area Setting Unit
- 34: Work Flight Regulation Information Generation Unit
- 34a: Flight Route Setting Unit
- 34b: Work Flight Attribute Value Setting Unit
- 5: Aerial Vehicle Control System
- 51: Work Flight Regulation Information Acquisition Unit
- 52: Aerial Vehicle Position Calculation Unit
- 53: Flight Control Unit
- 54: Work Control Unit
- BD: Boundary Line
- FW: Aerial Vehicle
- GW: Ground Working Machine
- OB: Obstacle
- SZ: Non-Work Area
- Z1: First Work Flight Inhibition Condition Area
- Z2: Second Work Flight Inhibition Condition Area

## Claims

1. An aerial vehicle management system for managing an aerial vehicle that performs work flight, comprising:
a work area acquisition unit configured to acquire a work target area;
a work flight inhibition condition management unit configured to manage a work flight inhibition condition for the work flight; and
a work area setting unit configured to set a non-work area in the work target area based on the work flight inhibition condition, and to set an area excluding the non-work area from the work target area as an actual work area.

2. The aerial vehicle management system according to claim 1, further comprising:
a work flight regulation information generation unit configured to generate work flight regulation information regulating the work flight for the actual work area based on the work flight inhibition condition.

3. The aerial vehicle management system according to claim 2,
wherein the work flight regulation information includes information regarding a flight area of the aerial vehicle during the work flight.

4. The aerial vehicle management system according to claim 3,
wherein the flight area is a three-dimensional space for which at least one of a minimum above-ground height and a maximum above-ground height is prescribed.

5. The aerial vehicle management system according to claim 4,
wherein the minimum above-ground height of the flight area is locally different.

6. The aerial vehicle management system according to claim 3,
wherein the work flight regulation information includes a flight route in the flight area.

7. The aerial vehicle management system according to claim 6,
wherein the flight route includes an actual work flight route along which flight is performed while work is actually performed and a non-work flight route along which flight is performed while work is temporarily stopped.

8. The aerial vehicle management system according to claim 7,
wherein a degree of work by the aerial vehicle on the actual work area is variable, and
the actual work flight route includes the degree of work of the aerial vehicle.

9. The aerial vehicle management system according to claim 8,
wherein the degree of work is a spraying amount per unit area in chemical spraying.

10. The aerial vehicle management system according to claim 6,
wherein a flight speed and a flight height are assigned to each flight position in the flight route.

11. The aerial vehicle management system according to claim 2,
wherein the work flight regulation information is manually modifiable.

12. An aerial vehicle comprising:
an information acquisition unit configured to download the work flight regulation information from the aerial vehicle management system according to any one of claims 2 to 11; and
a flight control unit configured to perform flight based on the work flight regulation information.

13. An aerial vehicle comprising:
the aerial vehicle management system according to any one of claims 1 to 11.
